# EUROPÄISCHE PATENTSCHRIFT

(11) **EP 3 519 701 B1**
(45) Veröffentlichungstag und Bekanntmachung des Hinweises auf die Patenterteilung: **28.12.2022**
(21) Anmeldenummer: 17765078.5
(22) Anmeldetag: 31.08.2017
(51) Int. Cl.: F15B 13/04

(54) **WEGEVENTIL MIT EINEM DÄMPFUNGSSYSTEM FÜR DIE STEUERUNG EINES DREHMOTORS EINER BAUMASCHINE**
DIRECTIONAL CONTROL VALVE WITH A DAMPING SYSTEM, FOR CONTROLLING THE SWING MOTOR OF A CONSTRUCTION MACHINE
DISTRIBUTEUR HYDRAULIQUE AVEC UN SYSTÈME D'AMORTISSEMENT, POUR LE CONTRÔLE D'UN MOTEUR TOURNANT D'UN ENGIN DE CONSTRUCTION

(30) Priorität: 01.10.2016 DE 102016011860
(43) Veröffentlichungstag der Anmeldung: 07.08.2019
(73) Patentinhaber: HYDAC Systems & Services GmbH, 66280 Sulzbach (DE)
(72) Erfinder: BIWERSI, Sascha Alexander, 66693 Mettlach (DE)
(74) Vertreter: Bartels und Partner, Patentanwälte
(86) Internationale Anmeldenummer: PCT/EP2017/001033
(87) Internationale Veröffentlichungsnummer: WO 2018/059727

(56) Entgegenhaltungen:
- EP-A2- 0 800 003
- JP-U- H0 341 286
- US-A- 6 021 813

## Beschreibung

Die Erfindung betrifft ein Ventil mit den Merkmalen im Oberbegriff von Anspruch 1. Die Erfindung betrifft des Weiteren eine Ventilvorrichtung mit einem dahingehend ausgestalteten Ventil.

Durch die DE 10 2013 021 317 A1 ist eine hydraulische Ventileinrichtung, insbesondere in Form eines LS-Wegeventils, bekannt mit an einer Gehäuseanordnung vorgesehenen Fluidanschlüssen, wie zumindest einem Druckversorgungsanschluss, zumindest einem Nutzanschluss und vorzugsweise einem Lastmeldeanschluss und mit einem Steuerschieber, der für ein zumindest teilweises Ansteuern von Fluidanschlüssen der Gehäuseanordnung in der einen oder anderen Bewegungsrichtung verfahrbar ist, wobei eine die Hublänge der Verfahrbewegung des Steuerschiebers in der einen und in der anderen Richtung begrenzende, einstellbare Anschlageinrichtung vorhanden ist.

Eine wesentliche Besonderheit der bekannten Lösung besteht darin, dass die genannte Anschlageinrichtung am gleichen axialen Endbereich des Steuerschiebers eine der einen Bewegungsrichtung zugewandte Anschlagfläche und eine der anderen Bewegungsrichtung zugewandte zweite Anschlagfläche aufweist, wobei für jede Anschlagfläche ein Gegenanschlag vorgesehen ist, die beide an dem betreffenden, gleichen Endbereich der Gehäuseanordnung lageeinstellbar angeordnet sind. Dadurch sind nicht nur beide Gegenanschläge von einer Gehäuseseite her zugänglich, sondern sie wirken auch unmittelbar, d.h. ohne mechanische Zwischenglieder auf den Steuerschieber ein. Die Gegenanschläge werden daher nur auf Zug oder Druck belastet, so dass es weder zu wahrnehmbaren Verformungen noch zu Festigkeitsproblemen kommen kann. Die Anschlageinrichtung ist daher nicht nur einfach und bequem einstellbar, sondern gewährleistet auch eine hohe Einstellgenauigkeit.

Solche LS-Wegeventile kommen auch für schwingungsanfällige Anwendungen in mobilen Arbeitsmaschinen zum Einsatz, beispielsweise in Form von Drehwerken an Kranen oder Baggern. Dabei ist das Drehwerk beispielsweise in Form eines üblichen Hydromotors ausgebildet, der als hydraulischer Verbraucher an den jeweiligen Nutzanschluss des Ventils anzuschließen ist. Insgesamt ist die Last auf der Verbraucherseite des Ventils regelungstechnisch gesehen ein PT-2-Glied, bestehend aus Kapazitäten auf der Zu- und Ablaufseite, überwiegend gebildet aus dem Ölvolumen in den Zu- und Ablaufleitungen zum Verbraucher und einer trägen Rotationsmasse, regelmäßig gebildet durch die zu bewegende Masse des Drehwerks. Das Bewegen linearer Massen, beispielsweise über übliche hydraulische Arbeitszylinder, ist demgegenüber gleichwertig als PT-2-Glied anzusehen.

Öffnet man den Steuerschieber von gewöhnlichen Load-Sensing-Ventilen, wie LS-Wegeventilen, bei solchen schwingungsanfälligen Anwendungen sprunghaft, wird mit Hilfe einer dem Ventil hydraulisch vorgeschalteten Druckwaage nach kurzer Zeit das angesprochene PT-2-Glied mit einem konstanten Volumenstrom angeregt, was zu Schwingungen im hydraulischen Fluidsystem führt. Insbesondere der Volumenstrom des Motors (Q-Motor) ist hierfür stellvertretend für die Geschwindigkeit des Drehwerks und es kommt zu mäßig gedämpften Schwingungen des gesamten Systems, was sich auch im Volumenstrom an der Rücklaufblende des Ventils bemerkbar macht. Je nach vorhandenem Dämpfungsgrad im System kann es dann zu erheblichen, schwer beherrschbaren Drehschwingungen kommen. Da, wie bereits dargelegt, der Rücklauf-Volumenstrom an der Rücklaufblende analog zur angesprochenen Schwingung verläuft, ist es des Weiteren für einen Durchschnittsfachmann auf dem Gebiet solcher hydraulischen Ansteuerungen für schwingungsanfällige Anwendungen naheliegend, in den Rücklauf des Ventils sogenannte Senk-Brems-Ventile einzubauen, damit im Rücklauf ein konstanter Volumenstrom eingeregelt wird. Nachteilig hierbei ist, dass der Dämpfungsgrad der PT-2-Strecke selbst nicht verändert wird und es mithin nur zu einer geringfügigen Verbesserung im System kommt. Weiterhin entstehen Kosten für die einzusetzenden zusätzlichen Ventile und es kommt zu hohen, nicht gewollten Druckverlusten im System.

Eine weitere Option, der Schwingungsanfälligkeit von hydraulischen Verbrauchersystemen zu begegnen, sind Ventile mit sogenanntem Load-Feedback. Bei diesen Lösungen sind die Verbindungen im Steuerschieber einerseits die LS-Meldung, was bei vielen anderen LS-Ventilen auch üblich ist, und andererseits eine Rückmeldung des Lastdrucks auf die Stirnfläche des Steuerschiebers, die nicht mit dem Steuerdruck beaufschlagt ist. Die Verbindung ist dann eine Druckteilerschaltung, die den Lastdruck auf ein LS-Signal reduziert, diesen weiterhin reduziert und auf die gegenüberliegende Stirnseite und letztendlich dann über einen Rücklaufanschluss im Ventil in Richtung Tank leitet. Hieraus folgt, dass der Steuerschieber proportional zum Lastdruck geschlossen wird. Sobald die erste Lastdruckspitze im Rahmen der Schwingung, bedingt durch den Versorgungs-Volumenstrom des Motors, im Aufbau ist, wird der Volumenstrom reduziert und ein Überschwingen des Drehwerks auf der Lastseite des Ventils verhindert, was die Schwingung an sich ja erst induziert. Insoweit wird also durch diese bekannte Lösung eine lastdruckabhängige gewünschte Dämpfung erzielt.

Nachteilig bei dieser Lösung ist jedoch, dass der LS-Meldung ein Volumenstrom entzogen wird, was in Kombination mit der Druckwaage zusätzlich den Volumenstrom reduziert, regelmäßig bedingt durch die Reduktion des Regel-Δp. Dabei ist es nicht sinnvoll, eine Dämpfung über die Regler-Verstärkung, also dem Regel-Δp der Druckwaage zu realisieren, da hier in Abhängigkeit der Eigendynamik Instabilität auftreten kann. Für progressive Kennlinien des Steuerschiebers (geringe Änderung der Blende im unteren Bereich des Öffnungs-Hubs) wird die Dämpfung im unteren Bereich ausschließlich über die Reduktion des Regel-Δp realisiert. Der Volumenstrom zur Erzielung des Dämpfungseffekts wird der Last entzogen, was eine genaue Einstellung der Geschwindigkeit nicht ermöglicht, und zwar auch dann nicht, wenn die Steuerschieberposition über einen Sensor genau erfasst wird.

Die US 6 021 813 beschreibt ein Ventil mit den Merkmalen im Oberbegriff von Anspruch 1 mit einem Ventilgehäuse, das mindestens einen Nutzanschluss, einen Druckversorgungsanschluss und einen Rücklaufanschluss aufweist und in dem zum Ansteuern dieser einzelnen Anschlüsse längsverfahrbar ein Steuerschieber geführt ist, wobei der am Druckversorgungsanschluss anstehende Versorgungsdruck zum Ansteuern eines an den jeweiligen Nutzanschluss angeschlossenen Verbrauchers über eine erste Blendeneinrichtung und einen Steuerkanal auf zumindest eine Ansteuerseite des Steuerschiebers geführt ist, die in einem Ansteuerraum im Ventilgehäuse verfahrbar angeordnet ist, der über eine dritte Blendeneinrichtung an den Rücklaufanschluss angeschlossen ist, wobei mindestens ein weiterer Nutzanschluss im Ventilgehäuse vorhanden ist und wobei die erste Blendeneinrichtung über den Steuerkanal an eine zweite Blendeneinrichtung angeschlossen ist, die bei einer Druckversorgung des einen Nutzanschlusses in den jeweils anderen Nutzanschluss für einen Fluid-Rücklauf einmündet und vor einer Rücklaufsteuerkante in Richtung des Rücklaufanschlusses eine Druckerhöhung im jeweils anderen Nutzanschluss bewirkt.

Die EP 0 800 003 A2 und die JP H03-41286 U beschreiben weitere Ventile. Ausgehend von diesem Stand der Technik liegt der Erfindung die Aufgabe zugrunde, ein Dämpfungssystem für Ventile, insbesondere für schwingungsanfällige Anwendungen, wie sie bei mobilen Arbeitsmaschinen auftreten können, zu schaffen, das die vorstehend beschriebenen Nachteile vermeiden hilft.

Eine dahingehende Aufgabe löst ein Ventil mit den Merkmalen des Patentanspruchs 1 sowie eine Ventilvorrichtung mit den Merkmalen des Patentanspruchs 8.

Eine wesentliche Besonderheit der erfindungsgemäßen Ventillösung liegt darin, dass in einer Neutralstellung des Steuerschiebers, bei der alle Anschlüsse voneinander separiert sind, der Druckversorgungsanschluss zwischen der ersten und der zweiten Blendeneinrichtung im Ventilgehäuse aufgenommen ist, das in dieser Neutralstellung die erste und die zweite Blendeneinrichtung in abdichtender Weise überdeckt.

Ferner ist vorgesehen, dass der am Druckversorgungsanschluss anstehende Versorgungsdruck zum Ansteuern eines an den jeweiligen Nutzanschluss des Ventils angeschlossenen Verbrauchers über eine Blendeneinrichtung an einen Steuerkanal auf zumindest eine Ansteuerseite des Steuerschiebers geführt ist, die in einem Ansteuerraum im Ventilgehäuse verfahrbar angeordnet ist, der über eine weitere, zweite Blendeneinrichtung an den Rücklaufanschluss des Ventils angeschlossen ist. Hierdurch wird die grundsätzliche Idee der erfindungsgemäßen Ventillösung realisiert, nämlich zur Dämpfung nicht wie üblich den LS-Druck zu verwenden, sondern den am Druckversorgungsanschluss des Ventils anstehenden Versorgungsdruck, damit das hydraulisch dem Ventil vorgeschaltete Regelglied in Form der Druckwaage von der Dämpfung nicht nachteilig beeinflusst wird.

Es ist vorgesehen, dass mindestens ein weiterer Nutzanschluss im Ventilgehäuse vorhanden ist und dass die erste Blendeneinrichtung über den Steuerkanal an eine zweite Blendeneinrichtung angeschlossen ist, die bei einer Druckversorgung des einen Nutzanschlusses in den jeweils anderen Nutzanschluss für einen Fluid-Rücklauf einmündet und vor einer Rücklaufsteuerkante in Richtung des Rücklaufanschlusses eine Druckerhöhung im jeweils anderen Nutzanschluss der beiden Nutzanschlüsse des Ventils bewirkt. Gerade bei geringen Volumenströmen und für den Erhalt von Feinsteuerkennlinien ist dergestalt eine Bypassverbindung vonseiten des am Druckversorgungsanschluss anstehenden Versorgungsdrucks in Richtung der Last am jeweils betroffenen Nutzanschluss vorhanden, damit der Druck vor der Rücklaufblende des Ventils schneller ansteigt und dergestalt einem Überschwingen der Last entgegenwirkt.

Die erfindungsgemäße Ventilvorrichtung gemäß der Merkmalsausgestaltung des Patentanspruchs 8 setzt dabei voraus, dass die dem erfindungsgemäßen Ventil vorgeschaltete Druckwaage ihren Versorgungsdruck von einer mittels eines Load Sensing-Drucks ansteuerbaren Schwenkwinkelpumpe erhält und dass insoweit dem Ventil nachgeschaltet ein schwingungsanfälliger hydraulischer Verbraucher, wie ein motorisch antreibbares Drehwerk, vorhanden ist.

Bei der erfindungsgemäßen Lösung werden die zur Dämpfung genutzten Volumenströme der an dem Ventil angeschlossenen Last nicht entzogen, was eine genaue Einstellung der Geschwindigkeit für den hydraulischen Verbraucher, beispielsweise in Form des Drehwerks, ermöglicht. Verwendet man einen Positionssensor für die Positionsermittlung des Steuerschiebers, kann hieraus auch die genaue Geschwindigkeit der Funktion abgeleitet werden.

Die vorstehend genannte Idee ist nicht auf Load Sensing-Ventile beschränkt, sondern kann auch für entsprechend konzipierte Drosselventile gleichfalls eingesetzt werden.

Weitere vorteilhafte Ausführungsformen der erfindungsgemäßen Lösung sind Gegenstand der sonstigen Unteransprüche.

Im Folgenden wird die erfindungsgemäße Lösung anhand der Zeichnung näher erläutert. Dabei zeigen in prinzipieller und nicht maßstäblicher Darstellung:
- Fig. 1: in der Art eines hydraulischen Schaltplanes den grundsätzlichen Aufbau einer Ventilvorrichtung;
- Fig. 2 und 3: einen Längsschnitt durch die wesentlichen Bauteile eines Ventils gemäß der Ventilvorrichtung nach der Fig. 1 in zwei verschiedenen Ventilstellungen;
- Fig. 4: in vergrößerter Darstellung einen Ausschnitt betreffend eine Blendendarstellung, wie er in Fig. 3 mit einem mit X bezeichneten Kreis umfasst ist;
- Fig. 5 und 6: eine im Stand der Technik bekannte als Load-Feedback bezeichnete Druckteilerschaltung bzw. eine erfindungsgemäße Druckteilerschaltung unter Einsatz des Ventils gemäß den Fig. 2 bis 4;
- Fig. 7 und 8: Grafiken betreffend den Volumenstrom Q an der Rücklaufblende für eine bekannte Ventillösung gemäß der Darstellung nach der Fig. 5 bzw. in vergleichbarer Darstellung den Volumenstrom Q an der Rücklaufblende bezogen auf die erfindungsgemäße Ventillösung gemäß der Darstellung nach der Fig. 6; und
- Fig. 9 und 10: zu den Grafiken nach den Figuren 7 und 8 entsprechende Darstellungen betreffend die Winkelgeschwindigkeit (strichliniert) eines angeschlossenen hydraulischen Verbrauchers nebst dem zugehörigen Zulaufvolumenstrom (durchgezogene Linie), wobei die Fig. 9 eine Lösung nach dem Stand der Technik zeigt und die Fig. 10 die Verhältnisse bei der erfindungsgemäßen Ventillösung betrifft.

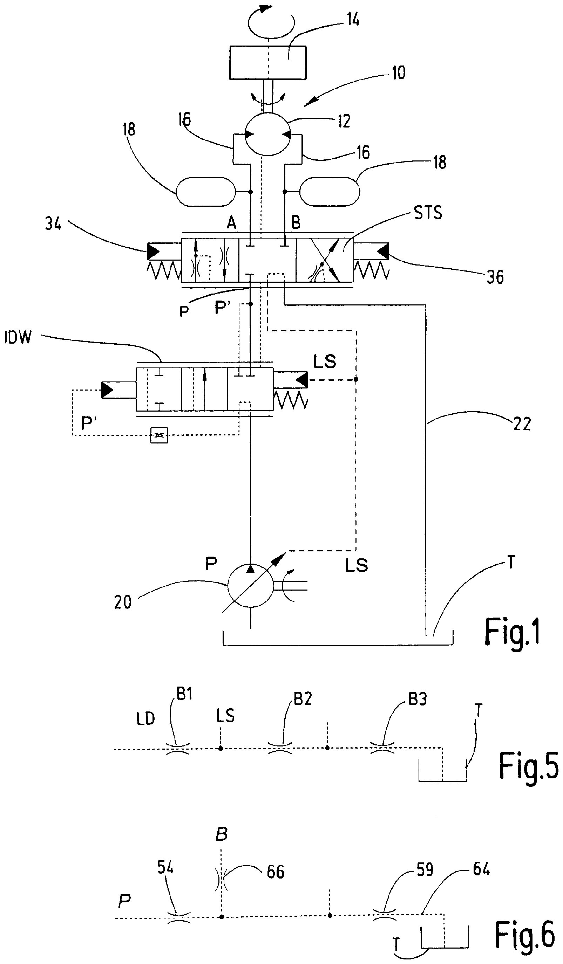

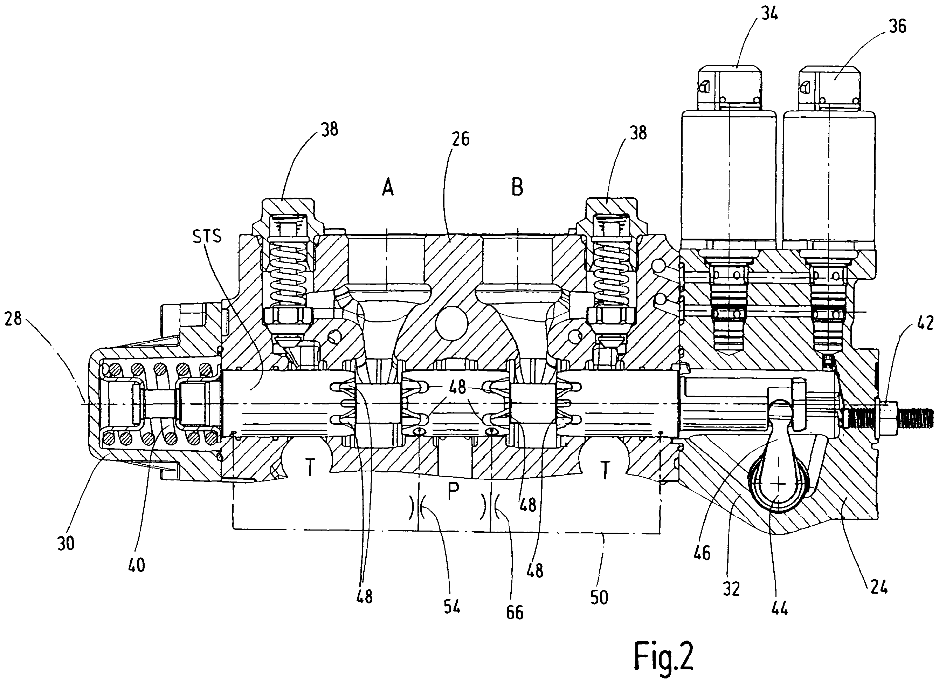

Die Fig. 1 zeigt in der Art eines hydraulischen Schaltplans eine Ventilvorrichtung zum Ansteuern eines Drehwerkes 10, wie es bei mobilen Arbeitsmaschinen zum Einsatz kommt, beispielsweise an einem Kran oder einem Bagger. Das Drehwerk 10 umfasst einen in beiden Drehrichtungen ansteuerbaren Hydromotor 12, der eine Last 14 in gegenläufige Drehrichtungen bewegen kann, wobei die Last 14 beispielsweise aus einem nicht näher dargestellten Kran- oder Baggerarm bestehen kann. Der Hydromotor 12 ist über Zu- und Ablaufleitungen 16 an ein Ventil ausgangsseitig über die Nutzanschlüsse A, B angeschlossen, wie es in den Fig. 2 bis 4 näher dargestellt ist. Insgesamt kann die Belastung auf der Verbraucherseite des gezeigten Ventils regelungstechnisch als PT-2-Glied angesehen werden, bestehend aus symbolisch in der Fig. 1 mit 18 bezeichneten Kapazitäten auf der Zu- und Ablaufseite für den Hydromotor 12, überwiegend gebildet aus dem Ölvolumen in den Zu- und Ablaufleitungen 16, und weiter bestehend aus einer trägen Rotationsmasse, regelmäßig gebildet durch die zu bewegende Masse des Drehwerks unter Einbezug der angeschlossenen Last 14. Dem Ventil mit dem Steuerschieber STS hydraulisch vorgeschaltet ist eine Individual-Druckwaage IDW, die an einem Druckversorgungsanschluss P des Ventils einen Steuerdruck P' zur Verfügung stellt. Die Druckwaage IDW selbst wird von einer Schwenkwinkelpumpe 20 versorgt, die von einem Load Sensing-Druck LS ansteuerbar ist, die einen Pumpenversorgungsdruck P liefert. Das Ventil mit dem Steuerschieber STS ist über eine Rücklaufleitung 22 an einen Tank T angeschlossen, aus dem die Schwenkwinkelpumpe 20 das Versorgungsfluid für den Hydromotor 12 entnimmt.

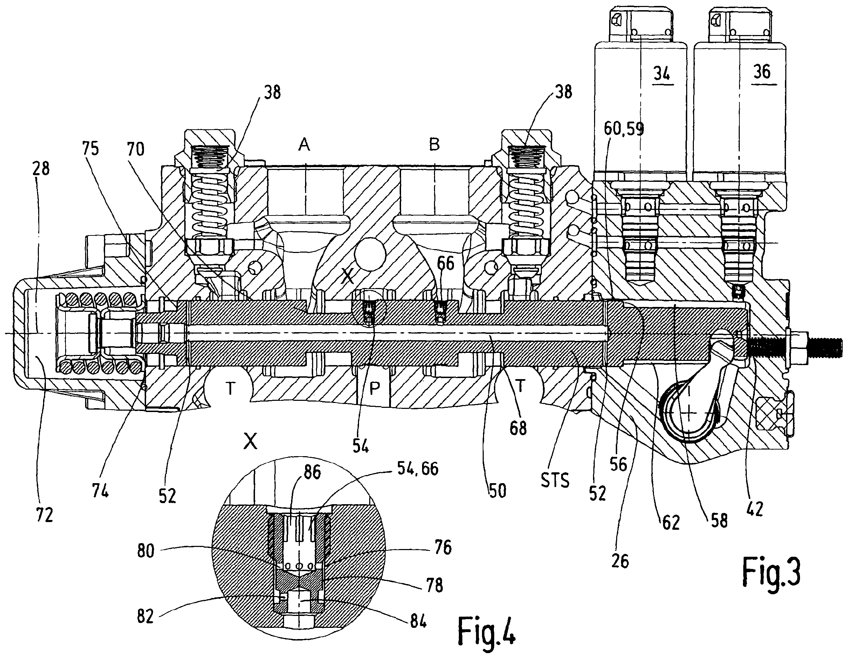

Das in der Fig. 1 gezeigte Ventil mit dem Steuerschieber STS wird nunmehr anhand der Fig. 2 bis 4 näher erläutert. Von der Gehäuseanordnung 24 sind in der Fig. 2 lediglich die mit der hydraulischen Ventil-Steuereinrichtung funktionsmäßig zusammenwirkenden Gehäusehauptteile gezeigt, nämlich ein Steuergehäuse 26, in dem der Steuerschieber STS entlang einer Achse 28 verfahrbar ist, sowie Gehäuseendbereiche 30 und 32, die das Steuergehäuse 26 an beiden axialen Enden abschließen; alle genannten Gehäuseteile bilden gemeinsam das Ventilgehäuse 33 aus. Am Steuergehäuse 26 befinden sich des Weiteren, wie bei derartigen Ventileinrichtungen üblich, einzelne Gehäuseanschlüsse wie ein Druckversorgungsanschluss P, zwei Nutzanschlüsse A und B sowie zwei Tank- oder Rücklaufanschlüsse T, die über die mindestens eine Rücklaufleitung 22 zum Tank T hin führen und demgemäß gleich bezeichnet sind. Sofern weiter gemäß der Darstellung nach der Fig. 1 die Ausgangsseite der Druckwaage IDW den Versorgungsdruck P' liefert, steht dieser als Druckversorgung am Druckversorgungsanschluss P des Ventils nach den Fig. 2, 3 an.

Der Steuerschieber STS der Steuereinrichtung respektive des Ventils nach der Fig. 2 als solcher ist in bekannter und daher nicht mehr näher zu beschreibender Art und Weise von üblichen, elektromagnetisch betätigbaren Pilotventilen 34, 36 ansteuerbar. Ferner ist in das Steuergehäuse 26 jeweils dem Nutzanschluss A und dem Nutzanschluss B zugeordnet ein federbelastetes Rückschlagventil 38 eingeschraubt, das als Druckbegrenzungs- oder Sicherheitsventil dient. Eine im Gehäuseendbereich 30 befindliche Federanordnung 40 gibt in der bei derartigen Wegeventilen üblichen Weise für den Steuerschieber STS eine Neutral- oder Mittelstellung vor, wie sie in der Fig. 2 wiedergegeben ist. In dieser in der Fig. 2 gezeigten Neutral- oder Mittelstellung ist der Druckversorgungsanschluss P von den Nutzanschlüssen A, B separiert und diese wiederum von den Tank- oder Rücklaufanschlüssen T. In Blickrichtung auf die Fig. 2 gesehen im rechtsseitig gelegenen axialen Endbereich 32 ist eine einstellbare Anschlageinrichtung 42 für die Hublängenbegrenzung des Steuerschiebers STS vorgesehen. Ferner ist eine Betätigung des Steuerschiebers STS von Hand über einen nicht näher dargestellten Schwenkhebel möglich, der an einem gerundeten Mitnehmerkopf 44 von außen her angreift, der wiederum über ein vorspringendes Hebelteil 46 in den Steuerschieber STS eingreift, um diesen von Hand im Bedarfsfall zu bewegen.

Die Darstellung nach der Fig. 3 entspricht im Grunde der Ventillösung nach der Fig. 2 mit der Maßgabe, dass der Steuerschieber STS sich in seiner ganz rechten Anschlagposition an der Anschlageinrichtung 42 befindet. In dieser Steuerschieberstellung nach der Fig. 3 ist eine fluidführende Verbindung zwischen dem Druckversorgungsanschluss P und dem Nutzanschluss A hergestellt und der Nutzanschluss B ist in Blickrichtung auf die Fig. 3 gesehen in fluidführender Verbindung mit dem rechten Rücklaufanschluss T. Der linke Rücklaufanschluss T ist hingegen mittels des Steuerschiebers STS gegenüber dem Nutzanschluss A abgesperrt. Für die angesprochenen medien- oder fluidführenden Verbindungen dienen im Steuerschieber STS entlang dessen Außenumfang angeordnete einzelne Steuernuten 48, die mit Steuer- oder Regelkanten im Inneren des Steuergehäuses 26 in diesen Bereichen zusammenwirken. Koaxial zur Längsachse 28 befindet sich innerhalb des Steuerschiebers STS des Weiteren ein Steuer- oder Längskanal 50, der endseitig jeweils ein Querkanalstück 52 aufweist.

Wie sich aus der Fig. 3 weiter ergibt, wird der am Druckversorgungsanschluss P anstehende Versorgungsdruck P', der von der Druckwaage IDW (Individual-Druckwaage) stammt, zum Ansteuern des Nutzanschlusses A über eine erste Blendeneinrichtung 54, wie sie in der Fig. 4 vergrößert wiedergegeben ist, und den Steuerkanal 50 sowie dem Querkanalstück 52 auf die rechte Ansteuerseite 56 des Steuerschiebers STS geführt, wobei die dahingehende Ansteuerseite 56 im rechten Gehäuseendbereich 32 als Teil des Ventilgehäuses 33 verfahrbar angeordnet ist, und wobei der Ansteuerraum 58 wiederum über eine weitere Blendeneinrichtung 59, die später auch mit dritter Blendeneinrichtung 59 bezeichnet wird, an den Rücklaufanschluss T angeschlossen ist. Die dahingehend weitere, dritte Blendeneinrichtung 59 ist insbesondere auch in der Fig. 6 wiedergegeben, und sie ist gemäß der Darstellung nach der Fig. 3 durch einen im Durchmesser gegenüber der zugeordneten Wand des Ventilgehäuses 33 geringfügig verringerten Abschnittsbereich 60 zwischen dem rechten Querkanalstück 52 und dem sich um eine Stufe verringerten Durchmesser 62 des Steuerschiebers STS gebildet. Die Verbindung zwischen Ansteuerraum 58 und Tank T erfolgt über eine entsprechende Tank-Rücklaufleitung 64, wie sie in Fig. 6 prinzipiell wiedergegeben ist. Bei Ansteuerung des Nutzanschlusses A und Entlastung des Nutzanschlusses B dreht der Hydromotor 12 das Drehwerk 10 dann beispielsweise im Uhrzeigersinn U.

Wie bereits vorgestellt, ist im Ventilgehäuse 33 ein weiterer Nutzanschluss B vorhanden, der bei einer entgegengesetzten Verschiebebewegung des Steuerschiebers STS mit Fluid vorgebbaren Drucks versorgt wird und dann bei erneuter Ansteuerung des Hydromotors 12 nunmehr in entgegengesetzter Richtung ein Verschwenken des Drehwerks 10 mit angeschlossener Last in entgegengesetzter Drehrichtung, wie vorstehend beschrieben, also entgegen dem Uhrzeigersinn U veranlasst. Wie sich insoweit weiter aus der Fig. 3 ergibt, ist an die eine Blendeneinrichtung 54 über den Steuerkanal 50 an diesen eine weitere andere Blendeneinrichtung 66 angeschlossen, die im Folgenden als zweite Blendeneinrichtung 66 bezeichnet ist. Die erste Blendeneinrichtung 54 ist zu der zweiten Blendeneinrichtung 66 identisch ausgebildet, so dass letztere gleichfalls der Darstellung nach der Fig. 4 entspricht. Diese zweite Blendeneinrichtung 66 mündet bei einer Druckversorgung des einen Nutzanschlusses A, wie in Fig. 3 gezeigt, in den jeweils anderen Nutzanschluss B für einen Fluid-Rücklauf ein und bewirkt vor einer Rücklauf-Steuerkante 68 im Ventilgehäuse 33 in Richtung des rechten Rücklaufanschlusses T eine Druckerhöhung im Bereich des genannten Nutzanschlusses B.

Wird entgegen der Darstellung nach der Fig. 3 der Steuerschieber STS in Blickrichtung auf diese Figur weit nach links verschoben, übernimmt die gezeigte Blende 54 die Funktion der Blende 66 für den zu entlastenden Nutzanschluss A und die Blende 66 die Funktion der Blende 54 für eine Druckversorgung, vom Druckversorgungsanschluss P ausgehend, in Richtung des Nutzanschlusses B. Die bisherige Blende 54 übernimmt also die Funktion der Blende 66 und regelt über eine weitere Rücklauf-Steuerkante 70 den Rückfluss vom Nutzanschluss A in Richtung zum linken Rücklaufanschluss T. Insbesondere im Bereich kleiner Volumenströme ist dergestalt ein Bypass über die Blenden 54 und 66 vom Druckversorgungsanschluss P zur Last in Form des Drehwerks 10 vorhanden mit der Folge, dass der Druck vor der jeweiligen Rücklaufblende in Form der Steuerkanten 68 bzw. 70 schneller ansteigt und demgemäß einem Überschwingen der angesprochenen Last entgegenwirken kann. Dies hat so keine Entsprechung im Stand der Technik.

Für eine sinnfällige Funktion ist in der angesprochenen Neutralstellung des Steuerschiebers STS, bei der alle Anschlüsse voneinander separiert sind, der Druckversorgungsanschluss P zwischen der einen ersten Blendeneinrichtung 54 und der anderen zweiten Blendeneinrichtung 66 im Ventilgehäusemittig aufgenommen, was sich aus der symmetrischen Anordnung der genannten Blenden 54, 66 zum Druckversorgungsanschluss P des Ventils gemäß der Darstellung nach der Fig. 2 ergibt. Sofern im Anmeldetext von Blenden die Rede ist, schließt dies Drosseln als Funktionselement mit ein.

Des Weiteren ist der Steuerkanal 50 in der Darstellung nach der Fig. 2 außerhalb des Steuerschiebers STS angeordnet, was dem Grunde nach gleichfalls möglich wäre.

Es ist selbstredend, dass bei einer Verfahrstellung des Steuerschiebers STS in einer seiner linken Endstellungen ein weiterer Ansteuerraum 72 geschaffen ist, der Fluid über eine weitere vierte Blendeneinrichtung 74 erhält, sobald das linke Querkanalstück 52 in den weiteren Ansteuerraum 72 einmündet. Auch an dieser Stelle findet dann, vergleichbar der Darstellung nach der Fig. 6, ein Fluidabfluss, nunmehr über den Nutzanschluss A und die Blende 54 in Richtung der vierten Blendeneinrichtung 74 statt. Auch insoweit sind die Verhältnisse, ähnlich wie bereits für die rechte Ventilschieberstellung STS, aufgezeigt. Auch weist insoweit der Steuerschieber STS auf seiner linken Seite eine weitere stirnseitig angeordnete Ansteuerseite 75 auf.

Wie sich des Weiteren aus der Darstellung nach der Fig. 4 ergibt, ist die eine 54 und die andere Blendeneinrichtung 66 aus jeweils einem Einschraubteil gebildet, das in den Steuerschieber STS von außen her eingeschraubt ist. Dergestalt wird über die jeweilige Blendeneinrichtung 54, 66 immer eine Fluidverbindung zwischen dem Steuerkanal 50 und dem jeweils zuordenbaren Anschluss A, B im Ventilgehäuse 33 hergestellt, je nach Verfahrrichtung des Steuerschiebers STS nach rechts oder nach links. Das jeweilige Einschraubteil bildet mit der Wand 76 des Steuerschiebers STS einen Fluidweg 78 zwischen mindestens zwei übereinander angeordneten drosselnden Querbohrungen 80, 82 im Einschraubteil aus. Die jeweilige Querbohrung 80, 82 im Einschraubteil steht daher jeweils mit einer Längsbohrung 84, 86 im Einschraubteil in Verbindung, die mit ihren voneinander angewandten Enden zum einen in den Steuerkanal 50 im Steuerschieber STS und zum anderen in Abhängigkeit der jeweiligen Verfahrstellung dieses Steuerschiebers STS in den Druckversorgungsanschluss P oder in einen der Nutzanschlüsse A, B ausmünden.

Die in der Fig. 3 wiedergegebenen Verhältnisse sind beispielhaft in der hydraulischen Schaltplandarstellung nach der Fig. 6 wiedergegeben. Hierzu gegenübergestellt ist eine bekannte Druckteilerschaltung nach der Fig. 5, die eingangsseitig einen Lastdruck LD über eine Blende B1 auf ein Load-Sensing-Signal LS reduziert, das wiederum über eine Art Blende B2 auf die gegenüberliegende Stirnseite des bekannten Ventilschiebers geleitet und letztendlich druckreduziert über eine Blende B3 in den Tank T gelangt. Die vorstehend genannten Blenden B1, B2 und B3 können sich auch aus der Ventilkonstruktion ergeben und müssen nicht zwingend als eigenständige Blendeneinrichtungen vorhanden sein. Hieraus ergibt sich zwar, dass der Steuerschieber STS proportional zu einem Lastdruck geschlossen wird und sobald eine erste Lastdruckspitze im Aufbau ist, der Volumenstrom reduziert und das Überschwingen des Drehwerks verhindert wird, was die Schwingung ja erst induziert, so dass eine lastdruckabhängige Dämpfung erreicht ist, jedoch mit den bereits beschriebenen Nachteilen, dass der LS-Meldung der Volumenstrom entzogen wird und ebenso der Last.

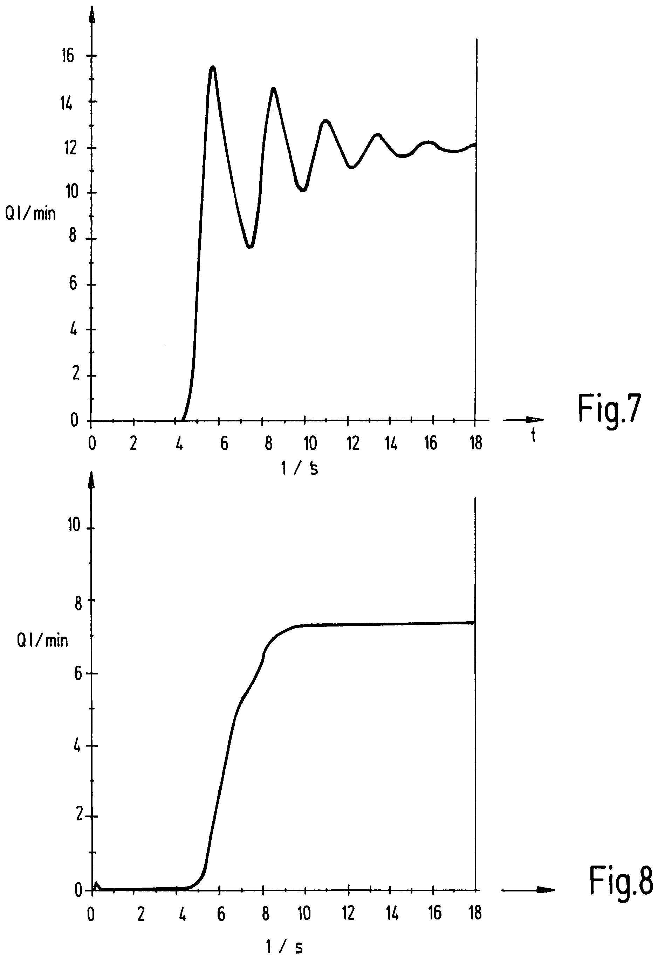

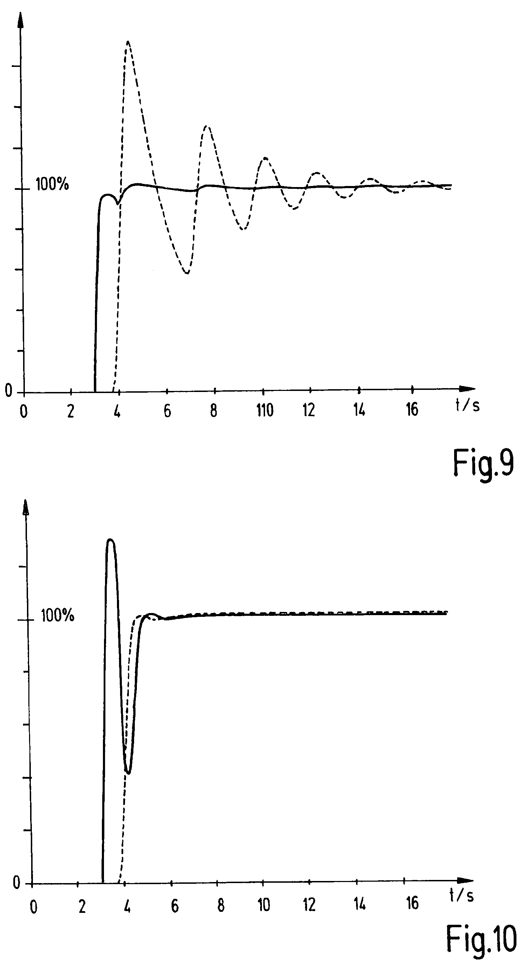

Eine dahingehende Sprungantwort mit einem Load Sensing-Ventil gemäß dem Stand der Technik für die angesprochene Rücklaufblende ist in der Fig. 7 dargestellt und zeigt, wie schwingungsanfällig bekannte Ventilvorrichtungslösungen sein können. Die Darstellung nach der Fig. 8 zeigt hingegen die Sprungantwort mit eingesetztem erfindungsgemäßem Ventil, wiederum betreffend die bereits vorgestellten Rücklaufblenden 68, 70 innerhalb der Ventilkonstruktion. Des Weiteren zeigen die Figuren 9 und 10 mit durchgezogener Linie den Zulaufstrom an einem der Nutzanschlüsse A, B eines bekannten bzw. des erfindungsgemäßen Ventils, an die der schwingungsanfällige hydraulische Verbraucher auf seiner Versorgungsseite angeschlossen ist. Die Lösung nach dem Stand der Technik gemäß der Fig. 9 zeigt, wie es zu einem Überschwingen bei der Winkelgeschwindigkeit für den Verbraucher bezogen auf 100 % kommt, sobald der Zulaufvolumenstrom am zugehörigen Nutzanschluss A, B des bekannten Ventils ansteigt.

Demgegenüber kommt es bei dem erfindungsgemäßen Ventil gemäß der Darstellung nach der Fig. 10 zunächst zu einem anfänglichen Überschwingen (> 100 %) beim Zulaufvolumenstrom, dem dann nach dem Einschwingen nachgeführt ohne weiteres größeres Überschwingen die Winkelgeschwindigkeit des Verbrauchers nachfolgt. Dergestalt sind gerade schwingungsanfällige Verbraucher beim hydraulischen Ansteuern mittels des erfindungsgemäßen Ventils vor Überschwingen geschützt und insoweit auch verbessert und genauer ansteuerbar.

Da zur Dämpfung des Schwingungsverhaltens gemäß der Erfindung nicht der LS-Druck verwendet wird, sondern der anstehende Druck P' am Druckversorgungsanschluss P des Ventils, wird das Regelglied Druckwaage IDW wenig nachteilig hiervon beeinflusst und aufgrund der Doppelblendeneinrichtungen 54, 66 wird erreicht, dass insbesondere für geringe Volumenströme ein Bypass von der Druckversorgungsseite P des Ventils hin zur an den Nutzanschlüssen A, B angeschlossenen Last 14 vorhanden ist, so dass der Druck vor der jeweiligen Rücklaufblende 68, 70 schneller ansteigt und dem Überschwingen der Last 14 entgegenwirkt. Demgemäß ist eine sehr kostengünstig zu realisierende funktionssichere Dämpfungseinrichtung für schwingungsanfällige hydraulische Anwendungen geschaffen.

## Patentansprüche

1. Ventil mit einem Ventilgehäuse (33), das mindestens einen Nutzanschluss (A, B), einen Druckversorgungsanschluss (P) und einen Rücklaufanschluss (T) aufweist und in dem zum Ansteuern dieser einzelnen Anschlüsse längsverfahrbar ein Steuerschieber (STS) geführt ist, wobei der am Druckversorgungsanschluss (P) anstehende Versorgungsdruck zum Ansteuern eines an den jeweiligen Nutzanschluss (A; B) angeschlossenen Verbrauchers (10, 12) über eine erste Blendeneinrichtung (54) und einen Steuerkanal (50) auf zumindest eine Ansteuerseite (56) des Steuerschiebers (STS) geführt ist, die in einem Ansteuerraum (58) im Ventilgehäuse (33) verfahrbar angeordnet ist, der über eine dritte Blendeneinrichtung (59) an den Rücklaufanschluss (T) angeschlossen ist, wobei mindestens ein weiterer Nutzanschluss (B; A) im Ventilgehäuse (33) vorhanden ist und wobei die erste Blendeneinrichtung (54) über den Steuerkanal (50) an eine zweite Blendeneinrichtung (66) angeschlossen ist, die bei einer Druckversorgung des einen Nutzanschlusses (A; B) in den jeweils anderen Nutzanschluss (B; A) für einen Fluid-Rücklauf einmündet und vor einer Rücklaufsteuerkante (68) in Richtung des Rücklaufanschlusses (T) eine Druckerhöhung im jeweils anderen Nutzanschluss (B; A) bewirkt, **dadurch gekennzeichnet, dass** in einer Neutralstellung des Steuerschiebers (STS), bei der alle Anschlüsse (P, A, B, T) voneinander separiert sind, der Druckversorgungsanschluss (P) zwischen der ersten (54) und der zweiten Blendeneinrichtung (66) im Ventilgehäuse (33) aufgenommen ist, das in dieser Neutralstellung die erste und die zweite Blendeneinrichtung (54, 66) in abdichtender Weise überdeckt.

2. Ventil nach Anspruch 1, **dadurch gekennzeichnet, dass** sowohl die erste (54) als auch die zweite Blendeneinrichtung (66) je nach Verfahrstellung des Ventilschiebers (STS) der Druckversorgung für einen Nutzanschluss (A; B) und dem Fluid-Rücklauf aus dem jeweils anderen Nutzanschluss (B; A) dient.

3. Ventil nach Anspruch 1 oder 2, **dadurch gekennzeichnet, dass** der Steuerkanal (50) den Steuerschieber (STS) durchgreift und endseitig jeweils ein Querkanalstück (52) aufweist, das in Abhängigkeit der jeweiligen Verfahrstellung des Steuerschiebers (STS) in Richtung seiner Endstellungen eine Fluidverbindung mit dem einen Ansteuerraum (58) mit der dritten Blendeneinrichtung (59) oder in entgegengesetzter Richtung einen weiteren Ansteuerraum (72) herstellt, in dem ein Energiespeicher (40) für den Steuerschieber (STS) angeordnet ist.

4. Ventil nach einem der vorstehenden Ansprüche, **dadurch gekennzeichnet, dass** die erste (54) und die zweite Blendeneinrichtung (66) aus jeweils einem Einschraubteil gebildet sind, das in den Steuerschieber (STS) eingeschraubt ist.

5. Ventil nach Anspruch 4, **dadurch gekennzeichnet, dass** das jeweilige Einschraubteil mit Wandteilen (76) des Steuerschiebers (STS) einen Fluidweg (78) zwischen mindestens zwei drosselnden Querbohrungen (80, 82) im Einschraubteil begrenzt, die jeweils mit einer Längsbohrung (84, 86) im Einschraubteil in Verbindung stehen, die mit ihren voneinander abgewandten Enden zum einen in den Steuerkanal (50) im Steuerschieber (STS) und zum anderen in Abhängigkeit der jeweiligen Verfahrstellung des Steuerschiebers (STS) in den Druckversorgungsanschluss (P) oder in einen der Nutzanschlüsse (A, B) ausmünden.

6. Ventil nach einem der vorstehenden Ansprüche, **dadurch gekennzeichnet, dass** es des Weiteren zwei Pilotventile (34, 36), zwei Druckbegrenzungsventile (38), eine Handbetätigungseinrichtung (44, 46) sowie zwei Rücklaufanschlüsse (T) aufweist, von denen jeder einem Nutzanschluss (A, B) zugeordnet ist.

7. Ventil nach einem der vorstehenden Ansprüche, **dadurch gekennzeichnet, dass** es als Lasthalte- oder Drosselventil ausgestaltet ist.

8. Ventilvorrichtung mit einem Ventil nach einem der vorstehenden Ansprüche, dem eine Druckwaage (IDW) vorgeschaltet ist, die ihren Versorgungsdruck von einer mittels eines Load Sensing-Drucks (LS) ansteuerbaren Schwenkwinkelpumpe (20) erhält und dass dem Ventil nachgeschaltet ein schwingungsanfälliger hydraulischer Verbraucher, wie ein Drehwerk (10), vorhanden ist.

## Claims

1. Valve having a valve housing (33) which comprises at least one work port (A, B), one pressure supply port (P) and one return port (T) and in which a valve spool (STS) is guided so as to be longitudinally movable for controlling these individual ports, wherein the supply pressure present at the pressure supply port (P) for actuating a consumer (10, 12) connected to the respective work port (A; B) is guided via a first orifice device (54) and a control channel (50) to at least one control side (56) of the valve spool (STS) which control side is arranged so as to be movable in a control chamber (58) in the valve housing (33), said control chamber being connected via a third orifice device (59) to the return port (T), wherein at least one further work port (B; A) is present in the valve housing (33) and wherein the first orifice device (54) is connected via the control channel (50) to a second orifice device (66) which, during pressure supply of the one work port (A; B), discharges into the respective other work port (B; A) for a fluid return and, upstream of a return control edge (68) towards the return port (T), brings about a pressure increase in the respective other work port (B; A), **characterised in that,** in a neutral position of the valve spool (STS), in which all ports (P, A, B, T) are separated from each other, the pressure supply port (P) is accommodated between the first (54) and the second orifice device (66) in the valve housing (33) which in this neutral position covers the first and the second orifice device (54, 66) in a sealing manner.

2. Valve according to claim 1, **characterised in that** both the first (54) and the second orifice device (66) are used, depending on the travel position of the valve spool (STS), to supply pressure for one work port (A; B) and the fluid return from the respective other work port (B; A).

3. Valve according to claim 1 or 2, **characterised in that** the control channel (50) passes through the valve spool (STS) and has at the end a cross channel piece (52) which, depending on the respective travel position of the valve spool (STS) towards its end positions, establishes a fluid connection to the one control chamber (58) with the third orifice device (59) or, in the opposite direction, establishes a further control chamber (72) in which an energy accumulator (40) for the valve spool (STS) is arranged.

4. Valve according to one of the preceding claims, **characterised in that** the first (54) and the second orifice device (66) are each formed of a screw-in part that is screwed into the valve spool (STS).

5. Valve according to claim 4, **characterised in that** the respective screw-in part with wall parts (76) of the valve spool (STS) delimits a fluid path (78) between at least two throttling transverse drilled holes (80, 82) in the screw-in part each of which communicates with a longitudinal drilled hole (84, 86) in the screw-in part, which drilled holes open out with their ends directed away from each other into the control channel (50) in the valve spool (STS), on the one hand, and depending on the respective travel position of the valve spool (STS) into the pressure supply port (P) or into one of the work ports (A, B), on the other hand.

6. Valve according to one of the preceding claims, **characterised in that** it further comprises two pilot valves (34, 36), two pressure-limiting valves (38), a manual actuating device (44, 46) and two return ports (T), each of which is associated with a work port (A, B).

7. Valve according to one of the preceding claims, **characterised in that** it is configured as a load-holding or throttle valve.

8. Valve device having a valve according to one of the preceding claims, a pressure compensator (IDW) which receives its supply pressure from a swivel angle pump (20) that is controllable by means of a load-sensing pressure (LS) is connected upstream of the valve and in that a vibration-susceptible hydraulic consumer, such as a slewing bearing (10), is present downstream of the valve.

## Revendications

1. Soupape ayant un corps (33) de soupape, qui a au moins un raccord (A, B) utile, un raccord (P) d'alimentation en pression et un raccord (T) de retour et dans laquelle, pour la commande de ces divers raccords, un tiroir (STS) de commande est guidé avec possibilité de se déplacer longitudinalement, dans laquelle la pression d'alimentation régnant au raccord (P) d'alimentation en pression est, pour la commande d'un consommateur (10, 12) raccordé au raccord (A ; B) utile respectif, appliquée, par un premier dispositif (54) à diaphragme et par un conduit (50) de commande, à au moins un côté (56) de commande du tiroir (STS) de commande, côté qui peut être déplacé dans un espace (58) de commande du corps (33) de la soupape, espace, qui est raccordé au raccord (T) de retour par un troisième dispositif (59) à diaphragme, dans laquelle il y a au moins un autre raccord (B ; A) utile du corps (33) de la soupape et dans laquelle le premier dispositif (54) à diaphragme est raccordé par le conduit (50) de commande à un deuxième dispositif (66) à diaphragme qui, lors d'une alimentation en pression de l'un des raccords (A ; B) utile, débouche pour un retour de fluide dans respectivement l'autre raccord (B ; A) utile et provoque, avant un bord (68) de commande de retour dans le sens du raccord (T) de retour, une élévation de la pression dans respectivement l'autre raccord (B ; A) utile, **caractérisée en ce que,** dans une position neutre du tiroir (STS) de commande, dans laquelle tous les raccords (P, A, B, T) sont séparés les uns des autres, le raccord (P) d'alimentation en pression est reçu entre le premier (54) et le deuxième dispositif (66) à diaphragme dans le corps (33) de la soupape, lequel dans cette position neutre recouvre d'une façon étanche le premier et le deuxième dispositifs (54, 66) à diaphragme.

2. Soupape suivant la revendication 1, **caractérisée en ce que**, tant le premier (54) qu'également le deuxième dispositif (66) à diaphragme servent chacun, suivant la position en déplacement du tiroir (STS) de la soupape, à l'alimentation en pression de l'un des raccords (A ; B) utiles et au retour de fluide de l'autre raccord (B ; A) utile.

3. Soupape suivant la revendication 1 ou 2, **caractérisée en ce que** le conduit (50) de commande traverse le tiroir (STS) de commande et a, du côté de l'extrémité, respectivement une pièce (52) de conduit transversale qui, en fonction de la position respective en déplacement du tiroir (STS), en direction de ses positions d'extrémité, donne une communication fluidique avec le un espace (58) de commande par le troisième dispositif (59) à diaphragme ou dans le sens contraire avec un autre espace (72) de commande, dans lequel est disposé un accumulateur (40) d'énergie pour le tiroir (STS) de commande.

4. Soupape suivant l'une des revendications précédentes, **caractérisée en ce que** le premier (54) et le deuxième dispositifs (66) à diaphragme sont formés respectivement d'une pièce à visser, qui est vissée dans le tiroir (STS) de commande.

5. Soupape suivant la revendication 4, **caractérisée en ce que** la pièce respective à visser délimite, avec des parties (76) de paroi du tiroir (STS) de commande, un chemin (78) pour du fluide entre au moins deux trous (80, 82) transversaux d'étranglement de la pièce à visser, qui communique respectivement avec un trou (84, 86) longitudinal de la pièce à visser, qui débouchent par leurs extrémités, non tournées l'une vers l'autre, d'une part dans le conduit (50) de commande du tiroir (STS) de commande et d'autre part, en fonction de la position respective en déplacement du tiroir (STS) de commande, dans le raccord (P) d'alimentation en pression ou dans l'un des raccords (A, B) utiles.

6. Soupape suivant l'une des revendications précédentes, **caractérisée en ce qu'**elle a en outre deux soupapes (34, 36) pilotes, deux soupapes (38) de limitation de la pression, un dispositif (44, 46) d'actionnement manuel ainsi que deux raccords (T) de retour, dont chacun est associé à un raccord (A, B) utile.

7. Soupape suivant l'une des revendications précédentes, **caractérisée en ce qu'**elle est équipée d'une soupape de maintien de la pression ou d'une soupape d'étranglement.

8. Dispositif à soupape, comprenant une soupape suivant l'une des revendications précédentes, en amont de laquelle est montée une balance (IDW) manométrique, qui reçoit sa pression d'alimentation d'une pompe (20) à angle de rotation pouvant être commandée au moyen d'une pression (LS) load sensing et en ce qu'il y a, en aval de la soupape, un consommateur hydraulique, comme un dispositif (10) de rotation, sujet à vibrer.
